(19) **Europäisches Patentamt**

**European Patent Office**

**Office européen des brevets**

(11) Veröffentlichungsnummer : **0 208 135**
**B1**

(12) # EUROPÄISCHE PATENTSCHRIFT

(45) Veröffentlichungstag der Patentschrift :
**07.09.88**

(51) Int. Cl.⁴ : **F 02 D 1/04**

(21) Anmeldenummer : **86107580.2**

(22) Anmeldetag : **04.06.86**

(54) **Fliehgewichtsversteller für einen Kraftstoffeinspritzpumpenregler.**

(30) Priorität : **03.07.85 DE 3523726**

(43) Veröffentlichungstag der Anmeldung :
**14.01.87 Patentblatt 87/03**

(45) Bekanntmachung des Hinweises auf die Patenterteilung : **07.09.88 Patentblatt 88/36**

(84) Benannte Vertragsstaaten :
**AT DE FR GB IT**

(56) Entgegenhaltungen :
**DE-A- 3 219 719**
**FR-A- 2 075 165**
**US-A- 1 708 923**
**US-A- 3 252 300**
**US-A- 4 359 985**

(73) Patentinhaber : **ROBERT BOSCH GMBH**
**Postfach 50**
**D-7000 Stuttgart 1 (DE)**

(72) Erfinder : **Krämer, Manfred, Dipl.-Ing.**
**Paradiesweg 25**
**D-7141 Schwieberdingen (DE)**

**Beschreibung**

Stand der Technik

Die Erfindung geht aus von einem Fliehgewichtsversteller nach der Gattung des Hauptanspruchs. Durch den Fliehgewichtsversteller wird dem Drehzahlregler der Kraftstoffeinspritzpumpe die Motordrehzahl in Form eines Stellweges als Ist-Größe eingegeben, aus der dann unter Auswertung der ebenfalls dem Regler einzugebenden Last die Einspritzmenge und damit die Soll-Drehzahl geregelt wird. Bei einem derartigen Fliehgewichtsversteller greifen an den Fliehgewichten beim Rotieren drehzahlabhängige Fliehkräfte an, die über mit den Fliehgewichten verbundenen Winkelhebeln auf eine Stellmuffe übertragen werden, wobei an der Muffe eine, diesen Kräften entgegenwirkende Feder angreift, so daß der Stellweg der Muffe den Zentrifugalkräften entspricht. Die Vorspannung der an der Muffe angreifenden Feder kann über den Regler lastabhängig geändert werden, so daß der Stellweg der Muffe der Last und Drehzahl entspricht.

Dieser dem Fliehgewichtsversteller nachgeschaltete Drehzahlregler weist ein Reglergestänge auf, an dessen Hebel jeweils Lagerstellen vorhanden sind, wobei auch Lagerstellen eines Hebels an dem Schaft eines anderen Hebels vorhanden sind. Dies führt zu einem recht komplizierten Zusammenwirken von teilweise in der wirksamen Länge änderbaren Hebeln, wobei die Lagerstellen eine sich unterschiedlich stark auswirkende Reibung aufweisen. Diesem dem Regler eingegebene Reibung bewirkt eine Hysterese der Regelung, die sich nachteilig auf den Motorbetrieb auswirkt. Eine derartige Coulombsche Reibung führt zu niederfrequenten Drehzahlschwankungen in Höhe von ca. 2 Hz im Leerlauf des Motors. Diese zum Sägen des Motors führenden Reglerfehler wirken sich deshalb besonders beim Leerlauf aus, weil dort nur geringe Kraftstoffmengen zugemessen werden und sich geringe Mengenunterschiede, ob von der Zumessung oder vom Verbrauch her gesehen, sehr stark auswirken, wobei bekanntlich Abweichungen von 30 % der pro Motorzylinder verbrauchbaren oder der zugemessenen Menge von der Soll-Menge auftreten können. Dynamisch betrachtet bewirken diese Unterschiede einen entsprechend jeweils sehr kurzfristigen Einfluß auf die Drehzahl des Motors und von der über den Drehzahlregler auf die Einspritzmenge, deren Änderung je nach dem für welchen Motorzylinder sie wirksam wird, eine ungewünschte Verstärkung oder Abbremsung der zu regelnden Durchschnittsdrehzahl bewirken kann. Dies kann dazu führen, daß bei angestrebten Leerlaufdrehzählen von 600 U/min die Abweichung mehr als 200 U/min betragen kann, was zu dem instabilen Lauf des Motors, diesem sogenannten Sägen führt.

Ein Dieselmotor weist bekanntlich einen erheblichen Ungleichförmigkeitsgrad im Rundlauf auf, der auf verschiedene Ursachen zurückführbar ist und der nur teilweise durch ein Schwungrad ausgleichbar ist. Dieser Drehungleichförmigkeitsgrad des Motors bewirkt in Abhängigkeit von der mittleren Drehzahl und von der Zylinderzahl Schwingungen zwischen 20-40 Hz. Während diese auf den Drehungleichförmigkeitsgrad des Motors beschriebenen Drehzahlschwingungen noch übersehbar sind, so daß gezielte Maßnahmen zur Dämpfung oder zur Teilerhaltung mit entsprechender Übertragung auf den Regler möglich sind, ist dieses bei den Sägeschwingungen, die zudem diesen Schwingungen überlagert sind, nicht mehr der Fall. Die Sägefrequenzen wirken sich nur als Störfrequenzen aus, die deshalb weitgehend eliminiert werden sollten. Die Antriebswelle des Fliehgewichtsverstellers, die beispielsweise bei einer Reiheneinspritzpumpe die Nockenwelle ist, wird unmittelbar von der Brennkraftmaschine angetrieben, so daß sich der Drehungleichförmigkeitsgrad unmittelbar auf das Antriebsteil dieses Fliehgewichtsverstellers überträgt. Bei dem gattungsgemäßen Fliehgewichtsverstellers ist deshalb zwischen Antriebsteil und Fliehgewichtsträger eine drehelastische Kupplung vorgesehen, die je nach positiver oder negativer Beschleunigung der jeweiligen Drehzahl bewirkt, daß der Fliehgewichtsträger der Drehbewegung des Antriebsteils vor- oder nachläuft, so daß aufgrund der drehelastischen Verbindung sich gegenüber einer fiktiven Mittellage ein positiver oder negativer Verdrehwinkel ergibt.

Bei einem bekannten gattungsgemäßen Fliehgewichtsversteller (CH-PS 214 249) dienen als drehelastische Kupplung gummielastische Elemente, die sich jeweils einerseits am Antriebsteil und andererseits am Fliehgewichtsträger abstützen. Durch eine derartige drehelastische Kupplung werden die durch Drehungleichförmigkeitsgrad des Motors sich der Umdrehungsbewegung überlagerten positiven und negativen Verdrehwinkel zum Fliehgewichtsträger hin gedämpft, mit dem Nachteil, daß der Drehzahlregler besonders im Leerlauf eine höhere hysteresebedingte Reibung entwickelt und damit träger und ungenauer wird, was sich als eine Zunahme der Sägeschwingungen im Leerlauf der Brennkraftmaschine auswirkt. Ein anderer bekannter Fliehgewichtsversteller (DE-PS 2 113 571) weist als elastische Kupplung eine Reibungskupplung auf, die mit zunehmendem Verdrehwinkel eine zunehmende Reibkraft hat und eine Spiralfeder aufweist zur Einstellung der Ausgangsverdrehlage der beiden Teile zueinander, welche einerseits am Antriebsteil und andererseits am Fliehgewichtskörper angreift. Auch mit dieser elastischen Kupplung wird eine starke Dämpfung der Übertragung des Drehungleichförmigkeitsgrad in der Drehbewegung erzielt und es soll dadurch vermieden werden, daß der Einspritzpumpenregler zu Drehschwingungen angeregt wird, die die Regelcharakteristik stören könnten ; es wird aber nachteiligerweise auch die Hysterese des noch viele Lagerstellen und Massen aufweisenden Drehzahlreglers im Leerlauf vergrößert, was sich besonders in einer Zunahme der Sägeschwingungen auswirkt.

## Vorteile der Erfindung

Der erfindungsgemäße Fliehgewichtsversteller für einen Kraftstoffeinspritzpumpenregler mit den kennzeichnenden Merkmalen des Hauptanspruchs hat dem gegenüber den Vorteil, daß der Drehungleichförmigkeitsgrad des Motors genutzt wird, um neben einer gewissen Dämpfung eine ausreichende Relativverdrehung zwischen Antriebsteil und Fliehgewichtsträger zu erhalten, die in Hubbewegungen umgesetzt, auf den Drehzahlregler wirken, so daß dessen Hysterese verringert wird. (Der drehelastisch gekuppelte Fliehgewichtsträger führt also, wie das Antriebsteil, Drehschwingungen aus, die aber relativ zur Nockenwellenbewegung bzw. zur Antriebsteilbewegung verlaufen). Diese auf den Drehungleichförmigkeitsgrad des Motors zurückgehenden Winkelausschläge der Relativverdrehung sind bei Leerlaufdrehzahl am größten und nehmen mit zunehmender Drehzahl ab. Auch bei kleiner Last sind die Winkelausschläge etwas geringer. In diesem Fall werden diese relativ zur Nockenwellenbewegung verlaufenden Drehschwingungen in kleine Axialbewegungen des von den Fliehgewichten angetriebenen Hubgliedes des Drehzahlreglers umgesetzt, wobei sich diese Hubschwingungen auf das Reglergestänge übertragen. Sobald bei der Relativverdrehung zwischen Antriebsteil und Fliehgewichtsträger die erfindungsgemäße Stufe in der Drehführung erreicht wird, erfolgt eine zusätzliche ruckartige Verschiebung in Axialrichtung des Fliehgewichtsträgers, die der obengenannten Hubverstellung überlagert ist. Diese zusätzliche Hubbewegung hat einen Rütteleffekt und bewirkt Rüttelschwingungen auf das Gestänge des Reglers, wodurch die mechanische Reibung weitgehend « herausschüttelbar » ist. Da die Eingangsamplitude (Winkelausschlag) mit steigender Drehzahl kleiner wird, wird auch der Differenzschwingwinkel kleiner, wodurch oberhalb einer bestimmten Drehzahl die Stufe in der Drehführung nicht mehr erreicht wird und damit der Rütteleffekt ab dieser Drehzahl automatisch aufhört. Vorteilhafterweise wird somit durch die Erfindung im Leerlaufbereich ein Rüttler zugeschaltet, der im Gesamtregelkreis wie ein in Reihe geschalteter Schwingungsdämpfer wirkt, und der ab einer bestimmten Drehzahl oder auch Lastzunahme aufgrund der dabei abnehmenden Drehschwingungsamplitude automatisch abgeschaltet wird. Die Eigenfrequenz dieses durch den Fliehgewichtsversteller gebildeten Drehschwingers kann durch Wahl und Gestaltung der elastischen Kupplung zwischen Antriebsteil und Fliehgewichtsträger, sowie durch die Art der Drehführung und der Stufe bestimmt werden. Diese Eigenfrequenz kann mit der Frequenz des Reglers abgestimmt werden und Störschwingungen können weitgehend kompensiert werden.

Nach einer vorteilhaften Ausgestaltung der Erfindung ist die Stufe als an dem Antriebsteil oder Fliehgewichtsträger angeordnete Erhebung ausgebildet, die mit einer durch zwei Übergangsstellen begrenzten, am anderen relativ verdrehbaren Teil angeordneten Vertiefung zusammenwirkt. Hierbei kann die Erhebung am Gleitstein angeordnet sein oder der Gleitstein selber als Erhebung dienen, der in einer Kulisse geführt ist, dessen eine dem Gleitstein in axialer Richtung gegenüberliegende Stirnfläche die Vertiefung aufweist. Als Antriebsteil kann hier entweder das Ende der Nockenwelle oder eine an dieses Ende festspannbare Muffe dienen. Die Abstimmung von drehelastischem Kupplungsglied, beispielsweise einer Feder, und der Länge des möglichen Verdrehweges sowie die Stelle an der die Stufe angeordnet ist, ist dabei vorteilhafterweise so gewählt, daß dieser Verdrehweg während des Betriebs nicht voll ausgenutzt wird, daß aber im Falle eines Bruchs der Feder ausreichende Notlaufeigenschaften mittels einer Drehmitnahme des Fliehgewichtsträgers durch das Antriebsteil gegeben sind. Vorteilhafterweise können bei diesem Aufbau in sehr einfacher Art die höheren, weniger schädlichen und leichter beherrschbaren Schwingungen des Drehunförmigkeitsgrad des Motors zum Verkleinern der Reglerhysterese verwendet werden, wobei im Leerlauf durch Auftreffen der Erhebung auf die Begrenzungen der Vertiefung in beiden Schwingungsrichtungen des erfindungsgemäßen Schwingers niederfrequente Drehzahlschwankungen abbaubar sind und wobei die Coulombsche Reibung in diesem für sie kritischen Drehzahlbereich des Reglers herausgeschüttelt wird.

Nach einer vorteilhaften Ausgestaltung der Erfindung kann die drehelastische Kupplung entweder als eine Feder oder aber als gummielastischer Puffer ausgebildet sein, nämlich einem elastischen Kraftüberträger der einerseits am Antriebsteil und andererseits am Fliehgewichtsträger angreift. Die elastische Kupplung muß vorteilhafterweise nur drehschwingfähig sein und dem Fliehgewichtsträger die Möglichkeit geben, gegenüber dem Antriebsteil auch in Axialrichtung einen der Stufenhöhe entsprechenden Relativweg durchzuführen.

Weitere Vorteile und vorteilhafter Ausgestaltungen der Erfindung sind der nachfolgenden Beschreibung, der Zeichnung und den Ansprüchen entnehmbar.

## Zeichnung

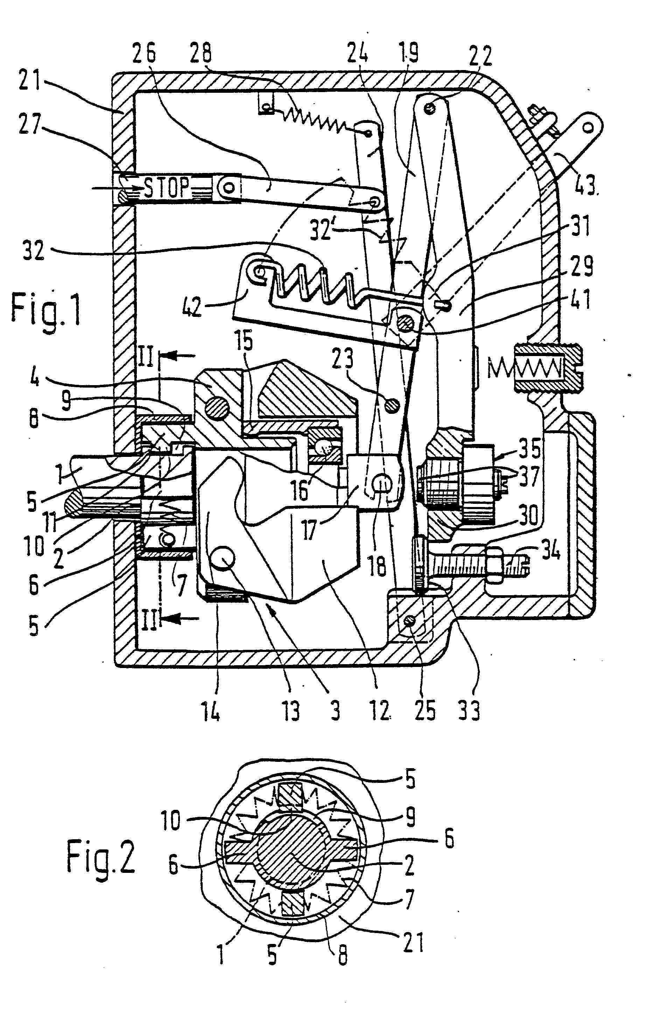

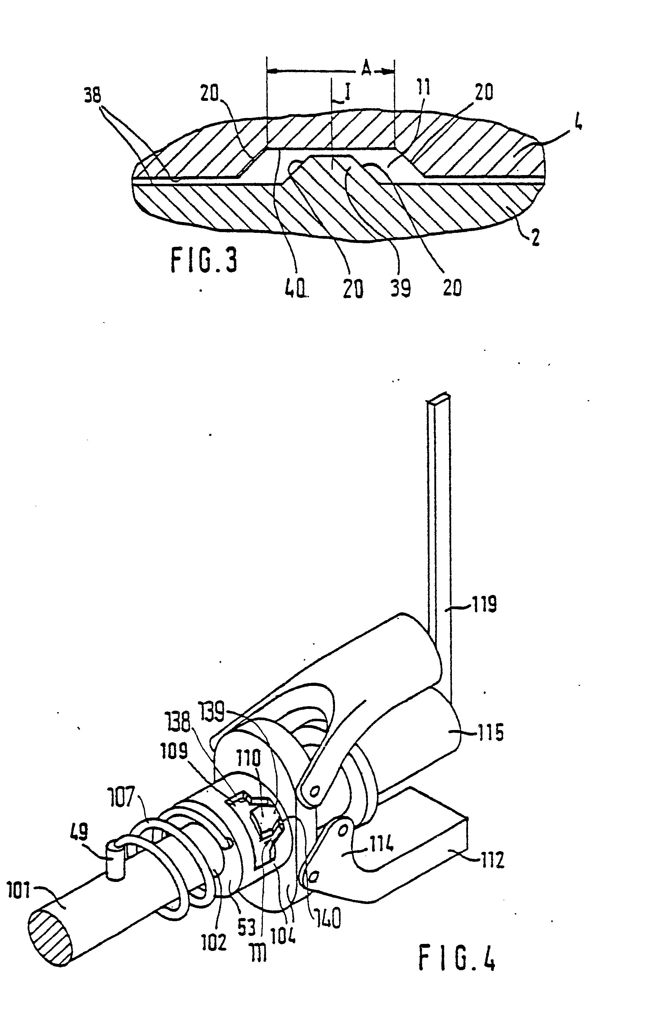

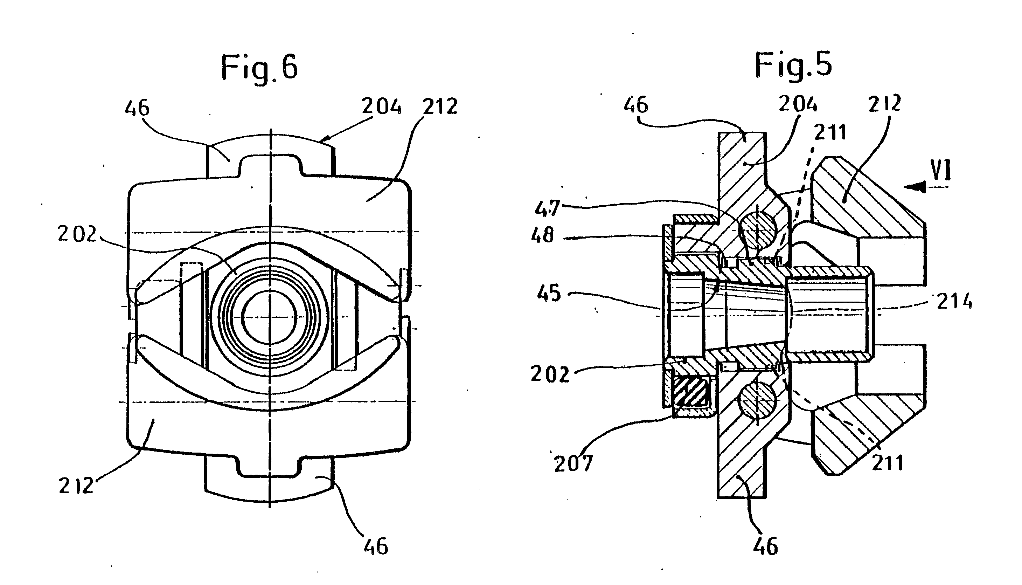

Drei Ausführungsbeispiele der Erfindung sind in der Zeichnung dargestellt und werden im folgenden näher beschrieben. Es zeigen Fig. 1 einen Längsschnitt durch einen Fliehkraftdrehzahlregler mit einem erfindungsgemäßen Fliehgewichtsversteller als erstes Ausführungsbeispiel, Fig. 2 einen Schnitt nach Linie II in Fig. 1, Fig. 3 eine schematische Darstellung der erfindungsgemäßen Stufe, Fig. 4 eine perspektivische Ansicht des zweiten Ausführungsbeispiels, Fig. 5 einen Längsschnitt durch das dritte Ausführungsbeispiel und Fig. 6 eine Ansicht des dritten Ausführungsbeispiels nach Pfeil VI in Fig. 5.

Beschreibung der Ausführungsbeispiele

Bei dem in Fig. 1 dargestellten Fliehkraftdrehzahlregler einer Kraftstoffeinspritzpumpe, die selbst nicht dargestellt ist, ist auf der Nockenwelle 1 derselben ein Antriebsteil 2 eines als erstes Ausführungsbeispiel gewählten Fliehgewichtverstellers 3 befestigt. Das Antriebsteil 2 ist hier der Einfachheit halber einstückig mit dem Ende der Nockenwelle 1 dargestellt und weist gegenüber der Nockenwelle 1 nur einen größeren Durchmesser auf. Auf dem Antriebsteil 2 ist radial geführt ein Fliehgewichtsträger 4 gelagert, wobei diese Lagerung einen bestimmten Drehwinkel, sowie axialen Hub zwischen dem Antriebsteil 2 und dem Fliehgewichtsversteller 3 zuläßt. Wie in Verbindung mit Fig. 2 der Fig. 1 entnehmbar ist, sind am Fliehgewichtsträger 4 als Mitnahmeglieder dienende Klauen 5 angeordnet, die über das Antriebsteil 2 greifen und radial von diesem geführt werden. Parallel zu diesen Klauen 5 sind am Antriebsteil 2 als Mitnahmeteile dienende Stege 6 vorhanden. Zwischen den Stegen 6 und den Klauen 5 sind elastische Kraftübertragungsmittel 7 vorgesehen, die hier als Schraubenfedern dargestellt sind aber genauso gut aus Gummi als Gummifedern ausgebildet sein können. Durch die Klauen 5, die Stege 6 und die elastischen Mittel 7 wird eine elastische Drehkupplung gebildet zwischen dem Antriebsteil 2 und dem Fliehgewichtsträger 4. Durch einen die elastische Kupplung 5, 6, 7 umgreifenden Käfig 8 wird verhindert, daß die elastischen Kraftübertragungsmittel 7 radial nach außen ausklinken. Diese elastischen Mittel 7 versuchen das Antriebsteil 2 und den Fliehgewichtsträger 4 zueinander in einer mittleren Drehstellung zu halten, geben jedoch nach, wenn entsprechend ausreichend hohe Drehbeschleunigungskräfte vom Antriebsteil 2 aus in die eine oder die andere Drehrichtung ausgehen. Wie beispielsweise in den weiter unten beschriebenen zwei anderen Ausführungsbeispielen gezeigt, können als elastische Drehkupplung natürlich auch andere geeignete Vorrichtungen dienen.

In der Mantelfläche des Antriebsteils 2 ist außerdem eine als Kulisse dienende quer zur Drehachse verlaufende Längsausnehmung 9 vorgesehen, in die ein Gleitstein 10 greift, der an einem der Klauen 5 des Fliehgewichtsträgers 4 angeordnet ist. Die Länge der Längsausnehmung 9 ist so gewählt, daß bei den Relativdrehbewegungen des Antriebsteils 2 zum Fliehgewichtsträger 4 der Gleitstein 10 aufgrund der Kraft der elastischen Mittel 7 nicht an das längsseitige Ende der Längsausnehmung 9 stößt. In Drehrichtung schwingt somit der Gleitstein 10 frei in der Kulisse 9. In der Axialrichtung des Fliehgewichtsverstellers 3 hingegen wird der Gleitstein 10 in der Längsausnehmung 9 geführt, so daß eine Drehführung zwischen Antriebsteil 2 und Fliehgewichtsträger 4 besteht. Diese Drehführung weist eine Stufe 11 auf, durch die ab einer bestimmten Relativverdrehung zwischen Antriebsteil 2 und Fliehgewichtsträger 4, d. h. ab einer bestimmten Schwingungsamplitude zwischen den Teilen der Fliehgewichtsträger 4 gegenüber dem Antriebsteil 2 kurzfristig axial verschoben wird, so daß eine Art Rütteleffekt entsteht, der sich dann vom Fliehgewichtsversteller 3 auf den Drehzahlregler überträgt. Natürlich kann diese Stufe 11 oder auch Rampe in unterschiedlicher Weise gestaltet sein, maßgebend ist, daß ab einer bestimmten Drehschwingungsamplitude diese Stufe 11 zur Wirkung kommt und außer der Drehschwingung auch eine Axialschwingungskomponente mit Rüttelwirkung entsteht. Auf diese Weise wird die durch den Drehungleichförmigkeitsgrad der Brennkraftmaschine bestehende relativ hochfrequente (bis 40 Hz) vorhandene Drehschwingung durch die elastischen Kraftübertragungsmittel 7 teilweise gedämpft, so daß sie nur verringert und damit nicht mehr störend auf den Drehzahlregler übertragen wird und außerdem ab einer bestimmten Schwingungsamplitude in Hubstöße umgesetzt wird, die den Fliehgewichtsversteller 3 zum Rüttler machen.

In Fig. 3 ist eine derartige Stufe 11 zum besseren Verständnis schematisch dargestellt, wobei an den einander zugewandten und durch die am Fliehgewichtsträger 4 angreifende Feder des Reglers gegeneinander gepressten Stirnflächen 38 von Antriebsteil 2 und Fliehgewichtsträger 4 eine Erhebung 39 auf der einen Stirnfläche und eine Vertiefung 40 auf der anderen Stirnfläche vorgesehen sind. An der Erhebung 39 sowie an der Vertiefung 40 sind in Verdrehrichtung als Übergangsstellen schräge Rampen 20 vorgesehen. Mit I ist die Schwingungsachse bezeichnet, die genau in der Mitte zwischen den Rampen 20 verläuft. Wenn nun von der Nockenwelle angetrieben das Antriebsteil zu rotieren beginnt, dann sind dieser Drehbewegung Drehschwingungen in und entgegen der Drehrichtung überlagert, die von Drehungleichförmigkeitsgrad der Brennkraftmaschine herrühren. Diese Drehschwingungen schwingen entsprechend um die Schwingungsachse I. Aufgrund der Elastizität der elastischen Kupplung zwischen Antriebsteil und Fliehgewichtsträger nähern und entfernen sich die Rampen 20 der Erhebung von denen der Vertiefung 40 in einer Häufigkeit, die der Frequenz der Drehschwingungen entspricht. Die elastische Kupplung wirkt dabei als Schwingungsdämpfer. Die Amplitude dieser Drehschwingungen ist unter anderem drehzahlabhängig, wobei mit zunehmender Drehzahl die Amplitude kleiner wird. In Fig. 3 ist die Amplitude mit A bezeichnet als Ausschlag der Schwingungen um die Schwingungsachse I. Der Abstand zwischen den Rampen 20 und die Federcharakteristik des elastischen Kraftübertragungsmittels ist so gewählt, daß bei Leerlaufdrehzahlen, bei denen die Amplitude A verhältnismäßig groß ist, gegenüberliegende Rampen 20 aufeinanderstoßen und ein Auseinandertreiben in Richtung der Schwingungsachse I des Fliehgewichtsträgers 4 vom Antriebsteil 2 bewirken. Sobald dann die Drehzahl weiter ansteigt oder auch die Last zunimmt, wird bekanntlich die Amplitude dieser Drehschwingungen kleiner, so daß die Rampen 20 nicht mehr in Berührung kommen und entsprechend die Axialverstellung ausbleibt. Diese Axialverstellung bewirkt das genannte Rütteln, so daß der erfindungsgemäße Fliehgewichtsversteller auch als Rüttler bezeichnet werden kann. Dieser Rüttler ist somit bei niederen Drehzahlen insbesondere Leerlaufdrehzahlen wirksam und schaltet sich automatisch ab, wenn die Drehzahl oder Last ansteigt. Wie in Fig. 1 gezeigt, sind am Fliehgewichtsträger 4 Fliehgewichte 12 auf Lagerbolzen 13 schwenkbar gelagert. Diese Fliehgewichte 12 greifen mit rechtwinklig zu ihnen angeordneten Armen 14 an einer als Regelglied dienenden Reglermuffe 15 an, die den durch die Fliehgewichte 12 bewirkten Muffenhub über ein Drucklager 16 auf einen Muffenbolzen 17 überträgt. Der Muffenbolzen 17 lenkt mittels Lagerzapfen 18 einen Führungshebel 19 des Drehzahlreglers an, der auf einen in dem mit 21 bezeichneten Reglergehäuse befestigten Lagerstift 22 schwenkbar ist und so die Reglermuffe 15 für ihre Hubbewegungen führt. Ein am Führungshebel 19 befestigter Stift 23 dient als Schwenklager eines zweiarmigen Zwischenhebels 24, dessen eines Ende gehäusefest auf einem Lagerstift 25 schwenkbar gelagert ist und an dessen anderen Ende über eine Lasche 26 die als Einspritzmengenverstellglied der Einspritzpumpe dienende Regelstange 27 angelenkt ist und auf der ein mit « STOP » beschrifteter Pfeil vorhanden ist, welcher die Richtung .in abnehmender Einspritzmenge anzeigt.

Am Ende des Zwischenhebels 24 greift eine zugleich als Startfeder dienende und im Reglergehäuse 21 eingehängte Spielausgleichfeder 28 an.

Auf dem Lagerstift 22 ist außer dem Führungshebel 19 ein als Kraftübertragungsglied dienender einarmiger Krafthebel 29 schwenkbar gelagert, der durch die Spannkraft einer im Bereich einer Einhängeöse 31 angreifenden Regelfeder 32 in der gezeichneten Lage gehalten wird, in der er mit seinem äußersten Ende 30 gegen einen Kopf 33 einer als Vollastanschlag dienenden Anschlagschraube 34 gedrückt wird.

In Höhe des Muffenbolzens 17 ist eine Angleicheinrichtung 35 in den Krafthebel 29 eingeschraubt, deren von einer nicht dargestellten Angleichfeder belasteter Anschlagbolzen 37 zur Steuerung der Angleichung mit dem Muffenbolzen 17 und der Reglermuffe 15 zusammenwirkt. Die Reglerfeder 32 ist über einen auf einem Zapfen 41 im Reglergehäuse 21 schwenkbar gelagerten Schwenkhebel 42 mittels eines am Zapfen 41 befestigten und außerhalb des Reglergehäuses 21 liegenden Bedienungshebel 43 in die dargestellte Stellung für die maximal zu regelnde Drehzahl vorgespannt. Die Schwenklage der Regelfeder 32 zur Regelung einer Leerlaufdrehzahl ist strichpunktiert dargestellt.

Der beschriebene mechanische Drehzahlregler arbeitet wie folgt : Für den Start wird der Bedienungshebel 43 in die dargestellte Lage, die einer maximalen Einspritzmenge entspricht, geschwenkt, wobei die Regelfeder 32 entsprechend vorgespannt wird. Die Regelfeder zieht den Krafthebel 29 mit seinem Ende 30 gegen den Kopf 33 der Vollastanschlagschraube 34. Die Regelstange 27 steht in Ruhelage der Fliehgewichte 12, durch die Vorspannkraft der Startfeder 28 bewirkt, in der die Startmenge steuernden Stellung. Nach erfolgtem Start und unter der Kraft der nach außen schwenkenden Fliehgewichte 12 verschiebt sich die Reglermuffe 15 aus der gezeichneten Lage nach rechts und verschiebt gegen die Kraft der Startfeder 28 den Muffenbolzen 17 bis an den Anschlagbolzen 37. Dabei wird die Regelstange 27 bekannterweise auf ihre für niedrige Drehzahlen festgelegte Vollaststellung zurückgenommen. In dieser Stellung verbleibt die Regelstange 27, bis entsprechend der Vorspannkraft der Angleichfeder der Anschlagbolzen 37 beginnt auszuweichen und damit die Angleichsteuerbewegung einleitet. Nach Beendigung des Angleichsteuerhubs verbleibt die Regelstange 27 solange in Vollaststellung, bis sie infolge der durch die Regelfeder 32 festgelegte Abregeldrehzahl und den Fliehgewichtsversteller 3 eingeleitete Abregelung in Richtung STOP verschoben wird.

Ein derartiger Drehzahlregler weist aufgrund der vielen Lagerstellen und Hebelübertragungen eine verhältnismäßig große innere Reibung auf, die sich besonders nachteilig bei niedrigen Drehzahlen, wie beispielsweise der Leerlaufdrehzahl, in Form einer großen Hysterese auswirken. Durch die Rüttlerwirkung des erfindungsgemäßen Fliehgewichtsverstellers 3 bei niederen Drehzahlen wird diese innere Reibung in erforderlichem Umfang herausgeschüttelt. Hierdurch werden in erster Linie die zum Sägen der Brennkraftmaschine führenden niederfrequenten Schwingungen unterbunden.

In Fig. 4 ist das zweite Ausführungsbeispiel eines Fliehgewichtsverstellers in perspektivischer Ansicht dargestellt. Auch hier ist der Einfachheit halber das Ende der Nockenwelle 1 als Antriebsteil 102 bezeichnet auf dem drehbar der Fliehgewichtsträger 104 gelagert ist. Die Fliehgewichte 112 des Fliehgewichtsträgers wirken mit ihren Armen 114 auf die Reglermuffe 115, die wiederum mit ihrem dem Fliehgewichtsversteller 3 abgewandten Ende auf den Führungshebel 119 wirkt. Zwischen dem Antriebsteil 102 und dem Fliehgewichtsträger 104 ist als elastisches Kraftübertragungsmittel eine koaxial zum Antriebsteil 102 angeordnete Schraubenfeder 107 vorgesehen, wobei durch einen drehfest mit der Nockenwelle 101 verbundener Zapfen 49 mit dem einen Ende dieser Schraubenfeder 107 verbunden ist, während ihr anderes Ende an einer stirnseitigen Fläche 53 des Antriebsteil 102 angreift. Am Antriebsteil 102 ist radial ein Kulissenstein 110 angeordnet, der eine als Kulisse dienende Längsausnehmung 109 im Fliehgewichtsträger 104 durchdringt. Als Stufe 111 ist auf der den Fliehgewichten 112 zugewandten Stirnfläche 138 dieser Längsausnehmung 109 die Vertiefung 140 und am Kulissenstein 110 die Erhebung 139 angeordnet, die die Rüttelbewegung bewirken.

Im Betrieb schwingt der Fliehgewichtsträger 104 mit einer der Frequenz entsprechenden Amplitude um das Antriebsteil 102 bzw. die Nockenwelle 101, wobei bei diesen Schwingungen, die als Drehfeder wirkende Schraubenfeder 107 pro Schwingung leicht geöffnet und wieder zusammengezogen wird. Ab einer bestimmten Amplitude stößt dann der Gleitstein 110 auf die Stufe 111, so daß der ganze Fliehgewichtsträger 104 einschließlich Fliehgewichten 112 und Reglermuffe 115 eine leichte Verschiebung in Axialrichtung des Fliehgewichtsverstellers erfährt und zwar bei jeder Schwingung, da der Kulissenstein 110 bei jeder Schwingung wieder von der Stufe heruntergleitet. Im übrigen arbeitet dieses zweite Ausführungsbeispiel wie das erste.

Auch das in den Figuren 5 und 6 dargestellte dritte Ausführungsbeispiel arbeitet im Prinzip gleich wie die beiden Beschriebenen. Das Antriebsteil 202 ist hier buchsenförmig ausgebildet und wird in einfacher üblicherweise mit seiner konischen Innenbohrung 45 auf das entsprechend ausgebildete Ende der Nockenwelle gespannt. Als elastisches Kraftübertragungsmittel dieser Mitnahmekupplung zwischen Antriebsteil 202 und Fliehgewichtsträger 204 dienen gummielastische Puffer 207, wie sie auch für Fliehgewichtsversteller als Dämpfer bekannt sind. Die Fliehgewichte 212 arbeiten in gleicher Weise wie weiter oben beschrieben, wobei deren rechtwinklig nach innen gewinkelten Arme 214 auf die hier nicht dargestellte Reglermuffe wirken. Wie aus Fig. 5 ersichtlich, weisen die Fliehgewichte 212 bei möglichst geringem Raum eine maximale Masse auf, wobei am Fliehgewichtsträger 204 flanschartige Enden 46 vorgesehen sind, die als Maximalanschlag der Fliehgewichte 212 dienen. Als Drehführung zwischen dem Antriebsteil 202 und dem Fliehgewichtsträger 204 dienen auf der Mantelfläche des Antriebsteils 202 zentralsymmetrisch angeordnete Erhebungen 47, die in entsprechende, als Kulisse dienende Nuten 48 in der Innenbohrung des Fliehgewichtsträgers 204 greifen. Auch hier ist zur Erzeugung des Rütteleffektes jeweils eine nicht näher dargestellte Stufe 211 vorgesehen, bei der, ähnlich wie in Fig. 3 schematisch dargestellt, sich jeweils zwei Rampen gegenüberliegen können.

## Patentansprüche

1. Fliehgewichtsversteller eines Kraftstoffeinspritzpumpenreglers mit einem mit motorsynchroner Drehzahl angetriebenen Antriebsteil, mit einem mit diesem Antriebsteil drehelastisch gekuppelten Fliehgewichtsträger und mit einer Begrenzung des elastischen Drehwinkels zwischen Antriebsteil und Fliehgewichtsträger, dadurch gekennzeichnet, daß zwischen Antriebsteil (2, 102, 202) und Fliehgewichtsträger (4, 104, 204) eine Führung mit einer Stufe (11, 111, 211) vorgesehen ist, so daß ab einer bestimmten Relativverdrehung zwischen Antriebsteil (2, 102, 202) und Fliehgewichtsträger (4, 104, 204) durch die Stufe eine Axialhubbewegung erzeugt wird, die dem fliehgewichtsbedingten Axialhub überlagert wird.

2. Fliehgewichtsversteller nach Anspruch 1, dadurch gekennzeichnet, daß die bestimmte Relativverdrehung durch Drehschwingungen der Antriebsdrehzahlen erzeugt wird, die bei Leerlauf und niederer Teillast liegt.

3. Fliehgewichtsversteller nach Anspruch 1 oder 2, dadurch gekennzeichnet, daß die Stufe (11, 111, 211) am Antriebsteil (2, 102, 202) und/oder Fliehgewichtsträger (4, 104, 204) angeordnet ist und Übergangsstellen (20) aufweist.

4. Fliehgewichtsversteller nach einem der Ansprüche 1 bis 3, dadurch gekennzeichnet, daß die Stufe (11) als an dem Antriebsteil (2) oder Fliehgewichtsträger (4) angeordnete Erhebung (39) ausgebildet ist, die mit einer durch zwei Übergangsstellen (20) begrenzten am anderen relativ verdrehbaren Teil (4, 2) angeordneten Vertiefung (40) zusammenwirkt.

5. Fliehgewichtsversteller nach einem der Ansprüche 1 bis 4, dadurch gekennzeichnet, daß als drehelastische Kupplung mindestens eine Feder (7, 107) dient, die einerseits am Antriebsteil (2, 102, 202) und andererseits am Fliehgewichtsträger (4, 104, 204) angreift.

6. Fliehgewichtsversteller nach Anspruch 5, dadurch gekennzeichnet, daß die Feder (7, 107) in beiden Verdrehrichtungen am Antriebsteil (2, 102) und Fliehgewichtsträger (4, 104) angreift, so daß ein um eine Mittellage schwingendes System entsteht, und daß die Federkraft mit zunehmendem Drehwinkel zunimmt.

7. Fliehgewichtsversteller nach Anspruch 5 oder 6, dadurch gekennzeichnet, daß als Feder eine schraubenförmige, koaxial zum Antriebsteil angeordnete und mit ihren Enden (51, 52) an dem Antriebsteil (2, 102) und dem Fliehgewichtsträger (4, 104) angreifende Torsionsfeder (107) dient (Fig. 4).

8. Fliehgewichtsversteller nach Anspruch 5 oder 6, dadurch gekennzeichnet, daß mindestens 2 Federn (7) mit entgegengesetzter Wirkrichtung vorgesehen sind.

9. Fliehgewichtsversteller nach Anspruch 8, dadurch gekennzeichnet, daß vier Federn (7) vorgesehen sind, die jeweils einerseits an einem Mitnahmeglied (5) des Fliehgewichtsträgers (4) und mit dem anderen Ende an einem Mitnahmeteil (6) des Antriebsteils (2) angreifen.

10. Fliehgewichtsversteller nach einem der Ansprüche 1 bis 4, dadurch gekennzeichnet, daß als elastisches Kraftübertragungsmittel gummielastische Puffer (207) dienen, die sich einerseits am Antriebsteil (202) und andererseits am Fliehgewichtsträger (204) abstützen.

## Claims

1. Centrifugal governor of a fuel injection pump regulator with a drive part, driven at engine-synchronous speed, with a centrifugal weight carrier coupled torsionally flexibly to this drive part and with a limitation of the flexible angle of ratation between drive part and centrifugal weight carrier, characterized in that a guide with a step (11, 111, 211) is provided between drive part (2, 102, 202) and centrifugal weight carrier (4, 104, 204), in such a way that, as from a certain relative torsion between drive part (2, 102, 202) and centrifugal weight carrier (4, 104, 204), an axial stroke movement is generated by the step and is superimposed on the axial stroke induced by the centrifugal weights.

2. Centrifugal governor according to Claim 1, characterized in that the certain relative torsion is generated by rotary oscillations of the drive speeds, which is in idling and at low partial load.

3. Centrifugal governor according to Claim 1 or 2, characterized in that the step (11, 111, 211) is arranged on the drive part (2, 102, 202) and/or centrifugal weight carrier (4, 104, 204), and has transition points (20).

4. Centrifugal governor according to one of Claims 1 to 3, characterized in that the step (11) is designed as an elevation (39) arranged on the drive part (2) or centrifugal weight carrier (4) which interacts with a depression (40) arranged in the other relatively torsional part (4, 2) and limited by two transition points (20).

5. Centrifugal governor according to one of Claims 1 to 4, characterized in that at least one spring (7, 107) serves as torsionally flexible coupling, which spring acts on the one hand on the drive part (2, 102, 202) and on the other hand on the centrifugal weight carrier (4, 104, 204).

6. Centrifugal governor according to Claim 5, characterized in that the spring (7, 107) acts in both directions of rotation on the drive part (2, 102) and centrifugal weight carrier (4, 104), so that a system oscillating about a central position is produced, and in that the spring force increases with increasing angle of rotation.

7. Centrifugal governor according to Claim 5 or 6, characterized in that a helical torsion spring (107), arranged coaxial to the drive part and acting with its ends (51, 52) on the drive part (2, 102) and the centrifugal weight carrier (4, 104) serves as spring (Fig. 4).

8. Centrifugal governor according to Claim 5 or 6, characterized in that at least 2 springs (7), with opposite directions of effect, are provided.

9. Centrifugal governor according to Claim 8, characterized in that four springs (7) are provided, which in each case act on the one hand on a dog element (5) of the centrifugal weight carrier (4) and with the other end on a dog part (6) of the drive part (2).

10. Centrifugal governor according to one of Claims 1 to 4, characterized in that elastomeric buffers (207) serve as flexible power transmission means and are supported on the one hand on the drive part (202) and on the other hand on the centrifugal weight carrier (204).

**Revendications**

1. Régulateur centrifuge pour pompes à injection de combustible, comprenant une partie d'entraînement qui est entraînée à une vitesse de rotation synchrone de celle du moteur et avec un porte-masselottes accouplé avec cette partie d'entraînement, de manière élastique en rotation, et avec une limitation de l'angle de rotation élastique entre la partie d'entraînement et le porte-masselottes, caractérisé en ce qu'un guidage avec un gradin (11, 111, 211) est prévu entre la partie d'entraînement (2, 102, 202) et le porte-masselottes (4, 104, 204), de telle sorte qu'un mouvement de course axiale soit créé par le gradin, à partir d'une torsion déterminée entre la partie d'entraînement (2, 102, 202) et le porte-masselottes (4, 104, 204), qui soit superposé à la course axiale conditionnée par le régulateur centrifuge.

2. Régulateur centrifuge selon la revendication 1, caractérisé en ce que la torsion relative déterminée est produite par les oscillations des vitesses de rotation, qui se présentent, lors du ralenti et de la charge partielle basse.

3. Régulateur centrifuge selon la revendication 1 ou 2, caractérisé en ce que le gradin (11, 111, 211) est disposé sur la partie d'entraînement (2, 102, 202) et/ou le porte-masselottes (4, 104, 204) et possède des points de transition (20).

4. Régulateur centrifuge selon l'une des revendications 1 à 3, caractérisé en ce que le gradin (11) est conçu comme une élévation (39) disposée sur la partie d'entraînement (2) ou bien sur le porte-masselottes (4) et qui coopère avec une cavité (40) délimitée par deux points de transition (20) disposée sur l'autre partie (4, 2) sujette à une torsion relative.

5. Régulateur centrifuge selon l'une des revendications 1 à 4, caractérisé en ce qu'au moins un ressort (7, 107) sert d'accouplement élastique en torsion et vient en prise d'un côté, sur la partie d'entraînement (2, 102, 202) et de l'autre côté, sur le porte-masselottes (4, 104, 204).

6. Régulateur centrifuge selon la revendication 5, caractérisé en ce que le ressort (7, 107) vient en prise dans les deux sens de rotation, sur la partie d'entraînement (2, 102, 202) et sur le porte-masselottes (4, 104), de telle sorte qu'apparaisse un système oscillant autour d'une position médiane et que la force du ressort croisse avec l'angle de rotation.

7. Régulateur centrifuge selon la revendication 5 ou 6, caractérisé en ce qu'un ressort de torsion (107) de forme hélicoïdale, disposé coaxialement à la partie d'entraînement et venant en prise par ses extrémités (51, 52), sur la partie d'entraînement (2, 102) et le porte-masselottes (4, 104), sert de ressort (figure 4).

8. Régulateur centrifuge selon la revendication 5 ou 6, caractérisé en ce qu'au moins deux ressorts (7) sont prévus, ayant un sens d'action opposé.

9. Régulateur centrifuge selon la revendication 8, caractérisé en ce que quatre ressorts (7) sont prévus, qui viennent en prise chacun d'un côté sur l'organe d'entraînement (5) du porte-masselottes (4) et de l'autre côté, sur une partie d'entraînement (6) de la partie d'entraînement (2).

10). Régulateur centrifuge selon l'une des revendications 1 à 4, caractérisé en ce que des tampons (207) en caoutchouc élastique servent de moyens élastiques de transmission de force et s'appuient d'un côté sur la partie d'entraînement (202) et de l'autre côté sur le porte-masselottes (204).

Fig.1

Fig.2

FIG.3

FIG.4

Fig.6

Fig.5

0 208 135